# EUROPEAN PATENT SPECIFICATION

(11) **EP 2 046 897 B1**
(45) Date of publication and mention of the grant of the patent: **19.10.2011**
(21) Application number: 06796240.7
(22) Date of filing: 28.07.2006
(51) Int. Cl.: C09C 1/00, C09C 1/24, C09C 1/34, C09C 1/36, C09D 11/00, C09D 5/03

(54) **COATING OF INORGANIC PIGMENTS WITH ALDEHYDE OR KETONE RESINS**
BESCHICHTUNG ANORGANISCHER PIGMENTE MIT ALDEHYD- ODER KETONHARZEN
ENROBAGE DE PIGMENTS INORGANIQUES EFFECTUÉ À L'AIDE DE RÉSINES D'ALDÉHYDE OU DE RÉSINES DE CÉTONE

(43) Date of publication of application: 15.04.2009
(73) Proprietor: Inxel Trademark & Patents SAGL, 6901 Lugano (CH)
(72) Inventor: BARDELLI, Achille, I-21020 Buguggiate (VA) (IT); RIBALDONE, Giorgio, I-21013 Gallarate (VA) (IT)
(74) Representative: Pistolesi, Roberto
(86) International application number: PCT/IT2006/000588
(87) International publication number: WO 2008/012848

(56) References cited:
- EP-A- 1 118 645
- WO-A-2004/074382
- WO-A-2005/054381
- WO-A-2005/080514
- WO-A-2006/082603
- WO-A-2007/007359
- DE-A1- 4 200 459
- DE-A1- 19 813 394
- US-A- 3 849 150
- US-A1- 2004 022 749

## Description

The present invention relates to a coating of inorganic pigments with aldehyde or ketone resins, in the form of granules, and also relates to the associated production process.

As is known, pigments are solids of inorganic nature, which are defined as such when they are used within a fixing system such as resins and absorb part of the light and reflect the complementary part thereof which forms the colour of the surface coated with this system.

As such, they are solids with a very irregular surface, which differs from compound to compound, and with properties for interfacing with other substances which are completely different from each other and are greatly influenced by the physical and chemical conditions of the contact elements.

The difficulties of incorporating pigments in vehicle systems based on a wide range of resins are well known.

This is true both in the case of powder systems, where contact of the pigment occurs with a polymer resin in the melted state inside an extruder and in the case of liquid systems where interfacing occurs with resins diluted with solvents which have a flocculating effect on the system.

At present in powder paint formulations the introduction of the pigments is performed by means of simple physical mixing of the pigments with differently shaped granules of the resins which form the vehicle, with the addition of chemical compounds able to improve the contact between pigment and resin and able to incorporate the pigment into the resin during the extrusion stage.

In order to facilitate metering of the colouring pigment, in many cases the latter is mixed with inert pigments in order to dilute the concentration and reduce the risk of metering difficulties in the case of small quantities.

The chemical compounds, described above, have the function of modifying the surface tension of the resins in the melted state or modifying wetting of the surface of the pigments.

The simultaneous presence of different pigments results in the need to use, in many cases, different types of chemical compounds, often having properties which conflict with and neutralize each other.

If follows that the development of the colour mixture, resulting from mixing of the pigments, is subject to inconsistency from one preparation to the next due not only to the change in environmental conditions, which differ in each case, but also to the varying properties of the pigment surfaces which vary from batch to batch and the surface tension properties of the polymers in the melted state which, even though not differing from batch to batch, may be very different as a result of changes in the environmental conditions.

In the case of liquid paint formulations in solvent phase, introduction of the pigments is conventionally performed by mixing the pigments with resins dissolved in solvent.

The presence of solvent is extremely negative owing to its flocculating properties which tend to make the contact between resin and pigment unstable.

In order to reduce this effect, anti-flocculating chemical compounds are normally added to these mixtures of pigments and resins dissolved in a solvent, these having the property of modifying and adjusting the electrostatic properties of the surfaces of the pigments and modifying the surface tension of the resin/solvent solution.

Owing to these negative effects typical of the pigment/resin/solvent system, the colour mixtures may be defined as unstable systems where the chromatic effect of the finished paint changes over time.

Improvements to this system have been made by means of pre-dispersion techniques and corresponding pulverization of monopigment pastes, where the pigment is incorporated in particular resins, also of an aldehyde and ketone nature, but dissolved in solvent and using formulations of chemical compounds, in order to interface the surface of the specific pigment with the selected dissolved resin.

Solid granulates which are obtained by extrusion from inorganic pigments and aldehyde or ketone resins have been developped(see the International patent application PCT/IT2005/000443 in the name of the applicant itself).

DE,A1,19813394 discloses dustless, homogenous pigment preparations, optionally in granulate shape, containing one or more effect pigment and an aldehyde resin and/or ketone resin.

It has now been found, and it is an object of the present invention, that said preparations can be improved in terms of homogeneity, pigment concentration and yields, by means of surfactants in the phase of preparation and extrusion, which allows the use of water as wetting agent of the preparation.

The use of water, in fact, allows to prepare an homogeneous mixture of pigment and resin which remains as such during the charge phase by the extruder's hopper, thus assuring a better homogeneity which allows a higher active principle concentration and yields.

One object of the invention is thus to provide a coating in the form of a particle composition which may be used as a semifinished product for the colouring and pigmentation of powder paints or also used, after dissolving, in a solvent as a pigmented paste in the liquid paints industry.

Another object is that of providing a coating in granule form which can be used to obtain mixtures of inorganic dies for pigmenting powder and liquid paints, overcoming the difficulties which are typically encountered in the use of pigments according to the prior art.

In particular, the granular composition of the present invention may be used as a semifinished product in powder paint formulations, as an alternative to the pure pigments which are not pre-coated. With their use it is possible to achieve a greater uniformity in the quality of the colouring system and a reduction in the quantity of pigment originally used to promote the colouring potential which the pre-coated material possesses. The granular form, moreover, facilitates automated transportation of the material and reduces dust pollution.

The product resulting from this invention will be used as a semifinished product for the colouring and pigmentation of powder paints or also used, after dissolving in a solvent, as a pigmented paste in the liquid paints industry or as a component for tinting finished paints or also for pigmenting and therefore colouring both thermoplastic and thermosetting plastics (e.g. polyethylene, polypropylene, polyethylene terephthalate PET, acrylonitrile-butadiene-styrene ABS, as well as polyurethanes of varying composition, and reinforced and unreinforced polyamides of varying composition).

In particular, compared to the coatings known in the art, the granular composition of the present invention is completely dust-free, has a high pigmentation effect (with a consequent reduction in the cost of colouring), has optimum dispersion (i.e. no flocculation) and easy dissolution properties and is characterized by a high compatibility (i.e. may be used in different systems, such as for example in powder paints instead of in plastics).

These and other objects, which will appear more clearly below, are achieved by a coating of inorganic pigments with aldehyde or ketone resins, characterized in that it comprises a chemical compound consisting of particles of solid inorganic substances, both defined pigments, and aldehyde or ketone resins deposited on its surface.

The subject of the present invention therefore consists of a particle composition consisting of inorganic pigments coated with at least, one aldehyde and/or ketone resin, said resin having an average molecular weight of between 800 and 2000 Da and melting point of between 70° and 330°C.

The term "aldehyde and/or ketone resin" is understood as meaning a condensation product of an aldehyde (preferably aliphatic aldehyde) or a ketone (preferably cyclohexanone or methylcyclohexanone), optionally with condensation products such as urea or formaldehyde.

These resins are well-known in the sector of colouring agents and are normally used in powder paint formulations, by simple physical mixing of the resin granules with the pigments, or in liquid paint formulations in solvent phase, by mixing the pigments with resins dissolved in a solvent. Examples of aldehyde or ketone resins are, for example, the products distributed by BAF such as Laropal®, which is incorporated herein by way of reference; in particular, Laropal® A 101 and A 81 are condensation products of urea and aliphatic aldehydes while Laropal® K 80 is the condensation product of cyclohexanone.

According to a preferential aspect of the invention, the aldehyde and/or ketone have an average molecular weight of between 900 and 1400 Da and melting point of between 90° and 110°C.

The composition of the present invention normally comprises from 80% to 20% by weight of pigment and from 80 to 20% by weight of resin and may contain excipients and/or adjuvants such as mineral reinforcing fillers and/or dispersants and/or rheological additives. According to a preferred embodiment of the invention, the composition essentially consists of from 40 to 70% by weight of pigment, from 30% to 60% by weight of resin and from 0.1 to 10% by weight of dispersants, preferably from 50 to 65% by weight of pigment, 35 to 45% by weight of resin and 1 to 7% by weight of dispersants.

For the purposes of the present invention, the term "essentially" is intended to indicate that the composition may contain minimum amounts, and in any case not higher than 20% by weight, of excipients and/or adjuvants and/or rheological additives and, in particular, of mineral reinforcing fillers. The percentages are intended with respect to the weight of the composition.

From among the mineral reinforcing fillers, barium sulphate is preferably used; the dispersants may be selected from among epoxidized soybean oils and sorbitan esters; preferably ethoxylated sorbitan ester, marketed by Uniqema as Atmer 116™, is used; from among rheological additives, silicates and derivatives thereof are preferably used, such as clay derivatives, as for instance Bentone™.

The composition in question is in the form of granules. The granules have a length of between 0.2 and 8.8 mm and diameter of between 0.4 and 2.2 mm, preferably a length of between 1.8 and 2.2 mm and diameter of between 1.0 and 1.8 mm; according to one of the possible embodiments of the invention, the composition contains 80 to 1000 granules per gramme thereof.

The pigment is mixed with the resin inside a container suitable for mixing powders and granulates.

The pigments which are used for the purpose of the invention, are listed below.

Iron oxide pigments, in all their shades of yellow, brown, red and black; in all their physical forms and grain categories.

Titanium dioxide pigments in all the different inorganic surface treatments.

Chromium oxide pigments also co-precipitated with nickel and nickel titanates.

Yellow pigments derived from lead sulphochromate. Yellow pigments derived from lead bismuth vandate.

Orange pigments derived from lead sulphochromate molybdate.

The research work, which was intended to identify from among the various polymers which may be used those suitable for obtaining this pigment coating, resulted in the families of aldehyde and ketone resins with a molecular weight of between 800 and 2000 and with a melting point of between 70° and 130°C.

The present invention relates preferably to the 100% use of polymers which, at the temperature of 20°C, are in the solid state.

The present invention covers all those mixtures of those pigments with these resins where the relative ratio of pigment and resin is between 80 and 20% and vice versa.

The prepared mixture is introduced into a heated-chamber extruder.

The present invention also relates to the use of single-screw and twin-screw extruders.

The extrusion is preferably performed at an internal temperature of the extruder 5-20°C higher than the melting temperature of the aldehyde or ketone polymer used.

The melted material leaving the extruder is preferably cooled on a cooling belt and spread using cooled steel cylinders.

The melted material leaving the extruder is conveyed into a die from where it is drawn with a constant cross-section and is cooled and granulated by means of a wet method using a water jet cutting action. Preferably the granules are produced by means of a water jet cutting granulator of the type produced by Gala Industries Inc. and described in international patent application WO 01/21371, incorporated herein by way of reference.

Drying of the granules may be performed by means of simple ventilation and also may be speeded up using centrifuges and filtration; in the preferred embodiment of the invention, in the case where the granulation step is performed by means of the abovementioned water jet cutting granulator, the granules are separated by the water on a vibrating screen and then dried on a spiral elevator.

In particular, an aqueous solution of the dispersant is prepared (the water is preferably used in a quantity of between 10 and 20% relative to the total weight of the formulation); the resin is introduced into the mixer and is wetted with an aliquot of said dispersant aqueous solution (about 50%); the pigment is introduced during mixing and the remaining aliquot of the dispersant aqueous solution is added; after mixing, the product is discharged and then transferred to the extruder.

Mixing, both in the case of organic pigments and in the case of inorganic pigments, is normally performed at a speed of between 800 and 2200 rpm.

### Use of the invention in powder paints

The coating according to the present invention may be advantageously used in powder paint formulations, as an alternative to pure pigments which are not pre-coated.

Their use ensures a more uniform quality of the colouring system and a reduction in the quantity of pigment originally used to promote the colouring potential which the pre-coated material possesses.

It is left to the technical expertise of the person using it to determine the exact amounts and the correct use of the specific pre-coated pigment for the end use for which the painting product is intended.

### Use of the invention in liquid paints

The coating according to the present invention may be advantageously used in formulations of liquid solvent paints, after dilution in solvent or dilution in resins pre-diluted in a solvent.

The pre-dilution methods may be direct, such as mixing with helical vanes as well as energy transfer by means of an increase in the specific surface area and using balls of a varying nature and size.

The pastes thus obtained may form semifinished products suitable for the production of liquid solvent paints.

The coating, according to the present invention, may be used without pre-dilution either in a solvent or in a resin dissolved in solvent for colouring or tinting (modifying colours) by means of simple addition to paints and corresponding dissolving both using direct means, such as helical vanes, and by means of energy transfer via an increase in surface area and using balls of varying nature and size.

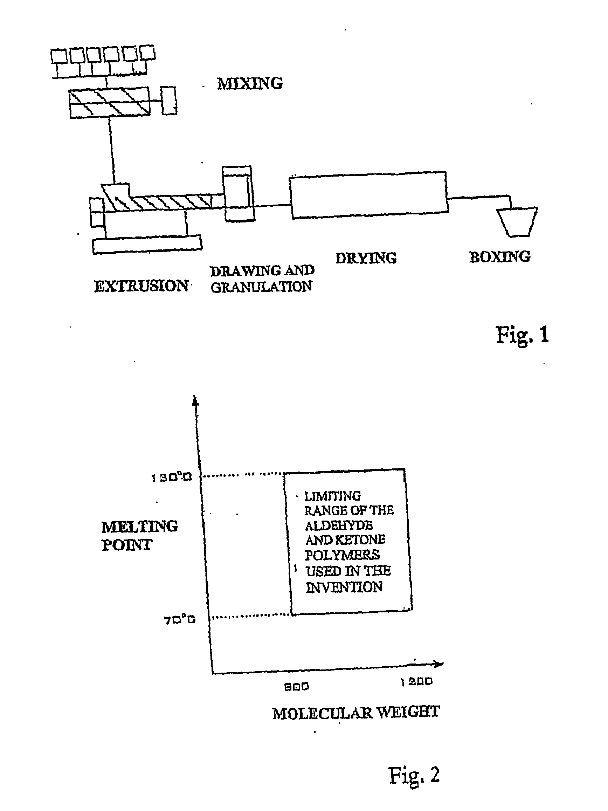

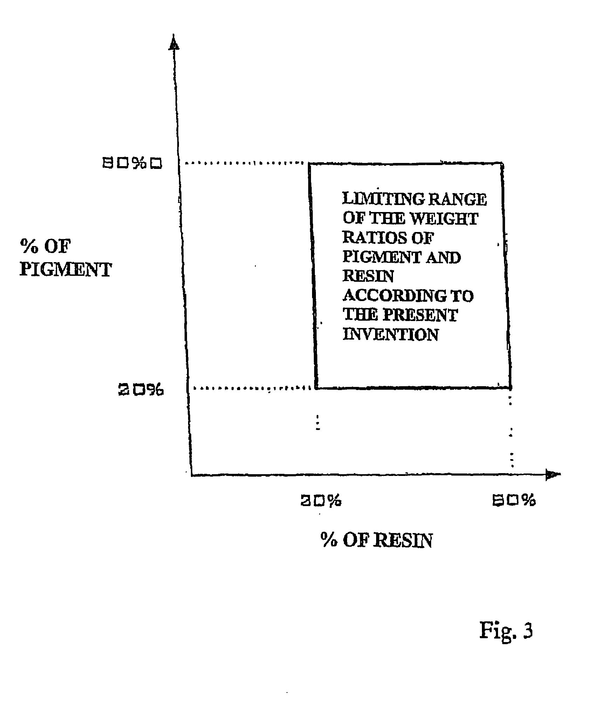

The coating according to the present invention is preferably used in formulations containing a monopigment and may be lined with aldehyde and ketone resins in the weight ratios shown in Figure 2, the molecular weight of which ranges between 800 and 2000 with the melting point between 70° and 130°C, as can be seen from Figure 3.

The preparation process is such that this coating is obtained by means of extrusion of the resinous part onto the pigment using a hot process, at a temperature 5-20°C higher than the polymer melting temperature and with cooling in a thin layer using a belt and cooling cylinder.

The process envisages atomization by means of cryogenic processes such that the transformation occurs below 20°C, with, the result that atomization takes place by means of fracture of the structure of the melted and resolidified resin, leaving however the pigment, be it organic or inorganic, completely coated.

It has been found in practice that the invention fulfils the task and achieves the predefined objects.

It has in fact been possible to provide a coating which is able to make up for the lack of standardization of the elements which are added when melting the polymer of the powder paints, during extrusion in order to incorporate the solid pigments.

The coating according to the present invention allows the production of coloured powder paints, with a degree of uniform quality, which is no longer dependent upon the environmental conditions in which the process of incorporating the pigment in the resin is performed, but is only the result of parameters which can be managed by the actual extrusion process.

This means that the pre-coated pigment no longer has an influence with the wettability properties of its surface and that the surface tension of the resin is uninfluential for the purposes of the uniformity and chromatic formation of the pigment mixture.

With the coating according to the present invention it is possible to overcome all the difficulties described above since the pre-coated pigment has eliminated all the effects associated with its pigment surface and is practically ready to be used also by means of simple dispersion in a solvent or even better in a solution of resins dissolved in solvent.

Obviously, the materials used, as well as the dimensions, may be any depending on the requirements and the state of the art.

### Use of the invention in plastics

The monochromatic granulate of pre-coated pigment may be used to colour the plastics, polyethylene, polypropylene, PET, ABS and polystyrene as well as polyurethane elastomers of various formulations. It may be used individually and mixed together in order to produce a given colour.

The metered mixture of various monochromatic granules allows composition of the final colour directly before the feeding step which converts the granules of plastic into the melted state for colouring and/or production of the final object.

In other words, the mixture of granules of different monochromatic colour allows the composition of a polychromatic colour by means of simple mixing. Hence it allows the composition of a colouring system based on monochromatic granules so as to obtain colours composed of various monochromatic pigments.

In the plastics sector, which this invention also embraces, hitherto master batches have been used for pigmentation and associated colouring.

These are mixtures of chromatic pigments with resin (similar to the resin used at the end), extruded and granulated.

These master batches, which are added in a small amount to the plastics before extrusion, pigment the mass of the plastic.

In some specific case of continuous and constant extrusions, always using the same material and same colour, it is possible to pigment the plastic by means of a liquid master batch where the pigment is pulverized in a liquid vehicle, such as plasticizers (polyacid esters).

The latter is fed onto the head of an extruder, before pigmentation by means of extrusion.

Never before has use been made of monopigment granules of pigments pre-coated with aldehyde or ketone resins, to be metered before the colouring extrusion of the plastic.

These granules may impart the final colour to the mass, without having to go through the complex preparation procedure involving finished-colour master batches.

The object of the present invention is that of allowing metering of the quantity of pigment already pre-pulverized and rendering less harmful handling of the original pigments.

Moreover, owing to the great molecular mobility of the aldehyde or ketone resin based coating, it is possible to achieve the uniform colouring, with monochromatic semifinished products and with the granulates according to the present invention, of plastics, of powder paints and liquid paints.

Further characteristic features and advantages of the subject of the present invention will emerge more clearly from an examination of the description of a preferred, but not exclusive embodiment of the invention, illustrated by way of a non-limiting example in the accompanying drawings in which:
- Figure 1 shows a diagram of a possible plant for the production of the granule coating according to the present invention;
- Figure 2 is a diagram illustrating the range of use of the coating according to the invention;
- Figure 3 is a diagram illustrating the relative ratio of pigment and resin in the mixtures of the coating according to the present invention.

The examples which follow have a purely illustrative and non-limiting function and identify some of the possible mixtures of compounds to be conveyed to the extruder in order to produce subsequently the particle compositions of the invention ; water must obviously not be regarded as a component of the final formulation since it has been eliminated during drying, and the parts are to be regarded as by weight.

### Example 1

| | | |
|---|---|---|
| • | yellow pigment(based on yellow iron oxide): | 60 |
| • | bentone: | 0,5 |
| • | atmer 116: | 2 |
| • | laropal A 81: | 37,5 |
| • | water: | 10 |

### Example 2

| | | |
|---|---|---|
| • | red pigment (based on red iron oxide): | 55 |
| • | bentone: | 0,5 |
| • | atmer 116: | 2 |
| • | laropal A 81: | 42,5 |
| • | water: | 10 |

### Example 3

| | | |
|---|---|---|
| • | yellow pigment (based on lead sulphochromate): | 65 |
| • | bentone: | 0,5 |
| • | atmer 116: | 2 |
| • | laropal A 81: | 32,5 |
| • | water: | 10 |

### Example 4

| | | |
|---|---|---|
| • | orange pigment (based on lead chromium molibdate) : | 60 |
| • | barium sulphate | 10 |
| • | bentone: | 0,5 |
| • | atmer 116: | 3 |
| • | laropal A 81: | 26,5 |
| • | water | 12 |

## Claims

1. Particle composition comprising inorganic pigments coated with at least one aldehyde and/or ketone resin in combination with dispersants, said resin having an average molecular weight of between 800 and 2000 Da and melting point of between 70° and 130°C, **characterized in that** it is in the form of granules having a length of between 0.2 and 8.8 mm and diameter of between 0.4 and 2.2 mm and **in that** said pigments are chosen from among iron oxide pigments, titanium oxide pigments, chromium oxide pigments co-precipitated with nickel and nickel titanates, yellow pigments from lead sulphochromate or lead bismuth vanadate, orange pigments from lead sulphochromate molybdate.

2. Composition according to Claim 1, **characterized in that** said resin has an average molecular weight of between 900 and 1400 Da and/or a melting point of between 90° and 110°C.

3. Composition according to Claims 1 to 2, **characterized in that** said aldehyde resin is the condensation product of aliphatic aldehydes and urea.

4. Composition according to Claims 1 to 2, **characterized in that** said ketone resin is the condensation product of cyclohexanone or methylcyclohexanone.

5. Composition according to Claims 1 to 2, **characterized in that** said ketone resin is the condensation product of cyclohexanone or methylcyclohexanone with urea or formaldehyde.

6. Composition according to any one of the preceding claims, **characterized in that** it contains from 80 to 20% by weight of said pigment and from 80 to 20% by weight of said resin.

7. Composition according to Claim 6, **characterized in that** it essentially consists of 40 to 70% by weight of inorganic pigment, 30 to 60% by weight of resin and 0.1 to 10% by weight of dispersants, preferably of 50 to 65% by weight of inorganic pigment, 35 to 45% by weight of resin and 1 to 7% by weight of dispersants.

8. Composition according to any one of the preceding claims, **characterized in that** said dispersants are chosen from among epoxidized soybean oils and sorbitan esters, preferably epoxylated sorbitan ester.

9. Composition according to any one of the preceding claims, **characterized by** containing mineral reinforcing fillers and/or rheological additives, said mineral reinforcing fillers and/or rheological additives being preferably present in amounts not higher than 20% by weight.

10. Composition according to Claim 1, **characterized in that** said granules have a length of between 1.8 and 2.2 mm and diameter of between 1.0 and 1.8 mm.

11. Composition according to Claim 1, **characterized in that** it contains from 80 to 1000 granules per gramme of composition.

12. Use of the composition according to any one of the preceding claims for the preparation of powder paints, liquid paints and plastics.

13. A process for the preparation of a granule composition according to Claim 1, comprising melting of the resin, wetting of the resin with a portion of aqueous solution of the dispersant, wetting of the entire surface of the pigment with the melted resin, extrusion of the mixture thus obtained, cooling thereof and subsequent granulation in the wet state and drying.

14. A process according to Claim 13, comprising wetting the pigment and/or the melted resin with an aqueous solution of the dispersant.

15. A process according to Claim 13, **characterized in that** extrusion is performed at an internal temperature of the extruder 5 to 20°C higher than the melting temperature of the resin.

16. A process according to Claim 13, **characterized in that** it comprises the use of single-screw and twin-screw extruders, preferably of the heated chamber type.

17. A process according to Claim 13, **characterized in that** the melted material leaving the extruder is cooled and granulated using a wet method with a water jet cutting action.

18. A process according to Claim 17, **characterized in that** the granules are separated by the water on a vibrating screen and then dried on a spiral elevator.

19. A process according to Claim 13, comprising a granule atomization step.

## Patentansprüche

1. Eine Partikelzusammensetzung enthaltend anorganische Pigmente, die mit mindestens einem Aldehyd- und/oder Ketonharz in Verbindung mit Dispergiermitteln beschichtet sind, wobei das Harz ein durchschnittliches Molekulargewicht von zwischen 800 und 2000 Da und einen Schmelzpunkt von zwischen 70°C und 130°C hat, **dadurch gekennzeichnet, dass** sie in Form von Granulat-Körnern mit einer Länge von zwischen 0,2 und 8,8 mm und einem Durchmesser von zwischen 0,4 und 2,2 mm vorliegt, und dass die genannten Pigmente aus Eisenoxidpigmenten, Titanoxidpigmenten, mit Nickel und Nickeltitanaten kopräzipitierten Chromoxidpigmenten, gelben Pigmenten aus Eisensulfochromat oder Bleibismutvanadat, und orangen Pigmenten aus Bleisulfochromatmolybdat ausgewählt sind.

2. Die Zusammensetzung gemäß Anspruch 1, **dadurch gekennzeichnet dass** das genannte Harz ein durchschnittliches Molekulargewicht von zwischen 900 und 1400 Da und/oder einen Schmelzpunkt von zwischen 90°C und 110°C hat.

3. Die Zusammensetzung gemäß den Ansprüchen 1 bis 2, **dadurch gekennzeichnet, dass** das genannte Aldehydharz das Kondensationsprodukt von aliphatischen Aldehyden und Harnstoff ist.

4. Die Zusammensetzung gemäß den Ansprüchen 1 bis 2, **dadurch gekennzeichnet, dass** das genannte Ketonharz das Kondensationsprodukt von Cyclohexanon oder Methylcyclohexanon ist.

5. Die Zusammensetzung gemäß den Ansprüchen 1 bis 2, **dadurch gekennzeichnet, dass** das genannte Ketonharz das Kondensationsprodukt von Cyclohexanon oder Methylcyclohexanon mit Harnstoff oder Formaldehyd ist.

6. Die Zusammensetzung gemäß irgendeinem der vorherigen Ansprüche, **dadurch gekennzeichnet, dass** sie von 80 bis 20 Gewichts-% des genannten Pigments und von 80 bis 20 Gewichts-% des genannten Harzes enthält.

7. Die Zusammensetzung gemäß Anspruch 6, **dadurch gekennzeichnet, dass** sie im Wesentlichen aus 40 bis 70 Gewichts-% anorganischem Pigment, 30 bis 60 Gewichts-% Harz und 0,1 bis 10 Gewichts-% Dispergiermitteln, bevorzugt aus 50 bis 65 Gewichts-% anorganischem Pigment, 35 bis 45 Gewichts-% Harz und 1 bis 7 Gewichts-% Dispergiermitteln besteht.

8. Die Zusammensetzung gemäß irgendeinem der vorherigen Ansprüche, **dadurch gekennzeichnet, dass** die genannten Dispergiermittel aus epoxidierten Sojabohnenölen und Sorbitanestern, bevorzugt aus epoxylierten Sorbitanestern ausgewählt sind.

9. Die Zusammensetzung gemäß irgendeinem der vorherigen Ansprüche, **dadurch gekennzeichnet, dass** sie verstärkende mineralische Füllstoffe und/oder rheologische Additive enthält, wobei die genannten verstärkenden mineralischen Füllstoffe und/oder die rheologischen Additive bevorzugt in Mengen von nicht mehr als 20 Gewichts-% vorhanden sind.

10. Die Zusammensetzung gemäß Anspruch 1, **dadurch gekennzeichnet, dass** das die genannten Granulat-Körner eine Länge von zwischen 1,8 und 2,2 mm und einen Durchmesser von zwischen 1,0 und 1,8 mm haben.

11. Die Zusammensetzung gemäß Anspruch 1, **dadurch gekennzeichnet, dass** sie von 80 bis 1000 Granulat-Körner pro Gramm der Zusammensetzung enthält.

12. Verwendung der Zusammensetzung gemäß irgendeinem der vorherigen Ansprüche zur Herstellung von Pulverfarben, flüssigen Farben und Kunststoffen.

13. Ein Verfahren zur Herstellung einer Granulatzusammensetzung gemäß Anspruch 1, welches Schmelzen des Harzes, Benetzen des Harzes mit einem Teil einer wässrigen Lösung des Dispergiermittels, Benetzen der gesamten Oberfläche des Pigments mit dem geschmolzenen Harz, Extrusion der so erhaltenen Mischung, Kühlung dieser Mischung und daran anschließend Granulierung im feuchten Zustand und Trocknung umfasst.

14. Ein Verfahren gemäß Anspruch 13, welches eine Benetzung des Pigments und/oder des geschmolzenen Harzes mit einer wässrigen Lösung des Dispergiermittels umfasst.

15. Ein Verfahren gemäß Anspruch 13, **dadurch gekennzeichnet, dass** die Extrusion bei einer Innentemperatur des Extruders durchgeführt wird, welche 5 bis 20 °C höher als die Schmelztemperatur des Harzes ist.

16. Ein Verfahren gemäß Anspruch 13, **dadurch gekennzeichnet, dass** es die Verwendung von Einzelschnecken- und Doppelschnecken-Extrudern, bevorzugt des Heizkammertyps, umfasst.

17. Ein Verfahren gemäß Anspruch 13, **dadurch gekennzeichnet, dass** das geschmolzene Material, das den Extruder verlässt, gekühlt und granuliert wird durch Einsatz eines Nassverfahrens mit Wasserstrahlschneide-Vorgang.

18. Ein Verfahren gemäß Anspruch 17, **dadurch gekennzeichnet, dass** die Granulat-Körner durch das Wasser auf einem Schwingsieb getrennt und dann auf einem Spirallift getrocknet werden.

19. Ein Verfahren gemäß Anspruch 13, das einen Granulatzerstäubungsschritt umfasst.

## Revendications

1. Composition de particules comprenant des pigments inorganiques enrobés avec au moins une résine aldéhydique et/ou cétonique en combinaison avec des dispersants, ladite résine ayant un poids moléculaire moyen compris entre 800 et 2000 Da et un point de fusion compris entre 70 °C et 130 °C, **caractérisée en ce qu'**elle est sous la forme de granules ayant une longueur comprise entre 0,2 et 8,8 mm et un diamètre compris entre 0,4 et 2,2 mm, et **en ce que** lesdits pigments sont choisis parmi les pigments d'oxyde de fer, les pigments d'oxyde de titane, les pigments d'oxyde de chrome co-précipités avec du nickel et des titanates de nickel, les pigments jaunes de sulfochromate de plomb ou de vanadate de bismuth et de plomb, les pigments oranges de molybdate-sulfochromate de plomb.

2. Composition selon la revendication 1, **caractérisée en ce que** ladite résine a un poids moléculaire moyen compris entre 900 et 1400 Da et/ou un point de fusion compris entre 90 °C et 110 °C.

3. Composition selon la revendication 1 ou 2, **caractérisée en ce que** ladite résine aldéhydique est le produit de condensation d'aldéhydes aliphatiques et d'urée.

4. Composition selon la revendication 1 ou 2, **caractérisée en ce que** ladite résine cétonique est le produit de condensation de la cyclohexanone ou de la méthylcyclohexanone.

5. Composition selon la revendication 1 ou 2, **caractérisée en ce que** ladite résine cétonique est le produit de condensation de la cyclohexanone ou de la méthylcyclohexanone avec de l'urée ou du formaldéhyde.

6. Composition selon l'une quelconque des revendications précédentes, **caractérisée en ce qu'**elle contient de 80 à 20 % en poids dudit pigment et de 80 à 20 % en poids de ladite résine.

7. Composition selon la revendication 6, **caractérisée en ce qu'**elle se compose essentiellement de 40 à 70 % en poids de pigment inorganique, de 30 à 60 % en poids de résine et de 0,1 à 10 % en poids de dispersants, de préférence de 50 à 65 % en poids de pigment inorganique, de 35 à 45 % en poids de résine et de 1 à 7 % en poids de dispersants.

8. Composition selon l'une quelconque des revendications précédentes, **caractérisée en ce que** lesdits dispersants sont choisis parmi les huiles de soja et les esters de sorbitan époxydés, de préférence un ester de sorbitan époxydé.

9. Composition selon l'une quelconque des revendications précédentes, **caractérisée en ce qu'**elle contient des charges de renforcement minérales et/ou des additifs rhéologiques, lesdites charges de renforcement minérales et/ou lesdits additifs rhéologiques étant de préférence présents en des quantités inférieures ou égales à 20 % en poids.

10. Composition selon la revendication 1, **caractérisée en ce que** lesdits granules ont une longueur comprise entre 1,8 et 2,2 mm et un diamètre compris entre 1,0 et 1,8 mm.

11. Composition selon la revendication 1, **caractérisée en ce qu'**elle contient de 80 à 1000 granules par gramme de composition.

12. Utilisation de la composition selon l'une quelconque des revendications précédentes, pour la préparation de peintures en poudre, de peintures liquides et de plastiques.

13. Procédé de préparation d'une composition de granules selon la revendication 1, comprenant la fusion de la résine, l'humidification de la résine avec une portion d'une solution aqueuse du dispersant, l'humidification de toute la surface du pigment avec la résine fondue, l'extrusion du mélange ainsi obtenu, le refroidissement de celui-ci et la granulation ultérieure à l'état humide et le séchage.

14. Procédé selon la revendication 13, comprenant l'humidification du pigment et/ou de la résine fondue avec une solution aqueuse du dispersant.

15. Procédé selon la revendication 13, **caractérisé en ce que** l'extrusion est réalisée à une température interne de l'extrudeuse de 5 à 20 °C au-dessus de la température de fusion de la résine.

16. Procédé selon la revendication 13, **caractérisé en ce qu'**il comprend l'utilisation d'extrudeuses à une vis ou à deux vis, de préférence de type chambre chauffée.

17. Procédé selon la revendication 13, **caractérisé en ce que** la substance fondue sortant de l'extrudeuse est refroidie et granulée en utilisant un procédé humide avec une action de découpage à jet d'eau.

18. Procédé selon la revendication 17, **caractérisé en ce que** les granules sont séparés par l'eau sur un tamis vibrant, puis séchés sur un élévateur à spirale.

19. Procédé selon la revendication 13, comprenant une étape d'atomisation des granules.
